# EUROPÄISCHE PATENTSCHRIFT

(11) **EP 3 706 939 B1**
(45) Veröffentlichungstag und Bekanntmachung des Hinweises auf die Patenterteilung: **28.06.2023**
(21) Anmeldenummer: 18796898.7
(22) Anmeldetag: 30.10.2018
(51) Int. Cl.: B04C 1/00, B04C 5/04, B33Y 30/00, B33Y 40/00, B22F 12/30, B22F 12/41, B22F 12/70, B29C 64/371, B01D 45/16, B01D 46/00, B22F 10/68, B22F 10/73, B22F 12/90

(54) **ABSAUGUNG BEI DER GENERATIVEN FERTIGUNG**
SUCTION DURING AN ADDITIVE MANUFACTURE
ASPIRATION LORS DE LA FABRICATION ADDITIVE

(30) Priorität: 06.11.2017 DE 102017125838
(43) Veröffentlichungstag der Anmeldung: 16.09.2020
(73) Patentinhaber: Trumpf Laser- und Systemtechnik GmbH, 71254 Ditzingen (DE)
(72) Erfinder: ZAISS, Joerg, 71735 Eberdingen (DE)
(74) Vertreter: Trumpf Patentabteilung
(86) Internationale Anmeldenummer: PCT/EP2018/079750
(87) Internationale Veröffentlichungsnummer: WO 2019/086479

(56) Entgegenhaltungen:
- EP-A1- 3 117 904
- EP-A1- 3 231 583
- EP-A2- 2 357 040
- DE-A1-102015 109 846
- DE-U1-202011 002 037

## Beschreibung

Die vorliegende Erfindung betrifft eine Vorrichtung zur laserbasierten generativen Fertigung und insbesondere die Absaugung von Gas aus einem Bearbeitungsbereich der generativen Fertigung.

Die laserbasierte generative Fertigung von, insbesondere metallischen oder keramischen, Werkstücken basiert auf einem Verfestigen eines in Pulverform vorliegenden Ausgangsmaterials durch die Bestrahlung mit Laserlicht. Dieses Konzept - auch als selektives Laserschmelzen, Pulverbettfusion oder Laser Metal Fusion (LMF) bekannt - wird unter anderem in Maschinen für den (metallischen) 3D-Druck eingesetzt. Eine beispielhafte Maschine (hierin kurz LMF-Maschine) zur Herstellung von dreidimensionalen Produkten ist in der EP 2 732 890 A1 offenbart. Die Vorteile der generativen Fertigung sind allgemein eine einfache Herstellung von komplexen und individuell erstellbaren Teilen. Dabei können insbesondere definierte Strukturen im Innenraum und/oder kraftflussoptimierte Strukturen realisiert werden.

EP 3 023 228 A1 offenbart eine Maschine zur generativen Fertigung von dreidimensionalen Produkten auf einer Plattform, die eine Gasströmung über die Plattform zur Entfernung von z. B. Rauch aus der Wechselwirkungszone bereitstellt. Weitere Gaskreislaufkonfigurationen sind z. B. aus DE 10 2010 052 206 A1, DE 10 2006 014 835 A1, WO 2010/007394 A1 und EP 1 839 781 A2 bekannt.

Bei derartigen Maschinen zur generativen Fertigung ist die Homogenität einer Gasströmung im Fertigungsraum für den Fertigungsprozess von großer Bedeutung. Inhomogenitäten in der Gasströmung können beispielsweise zu unterschiedlichen Werten bei den Teileeigenschaften in Bezug auf mechanische Eigenschaften, Dichte, Rauheit, Verfärbungen etc. führen.

Allgemein ist die Absaugung von Rauch mit Drallrohren beispielsweise aus der Gebäudetechnik bekannt. Ferner ist es bekannt, mit Drallrohren Rauch aus dem Bereich von Werkzeugmaschinen, wie z.B. Laserschneidmaschinen, abzusaugen. Dabei ist es jedoch üblich, beispielsweise Partikel (z. B. Agglomerate oder Spritzer) und ähnliches separat zu sammeln und abzuführen. Zusätzlich gibt es beim Laserschneiden die Intention Druckstöße einzusetzen, da ein sehr hoher Gasdruck beim Laserschneiden zum Abführen von bspw. Schlacke benötigt wird.

EP 3117904 A1 beschreibt ein Drallrohr bzw. eine Abscheidevorrichtung zur Abscheidung von Teilchen (Partikel oder Tropfen) aus einem Fluidstrom. Hierzu tritt der Fluidstrom tangential in einen Abscheideraum ein und wird durch die zylindrische Form des Abscheideraums in eine rotierende Strömungsbahn gezwungen bevor er über zwei Tauchrohre jeweils axial aus dem Abscheideraum ausströmt. Infolge der Kreisbewegung erfahren die Teilchen und das Fluid eine Zentrifugalbeschleunigung. Die abgeschiedenen Feststoffe können über Teilchenaustragsöffnungen aus dem Abscheideraum ausgetragen werden.

Einem Aspekt dieser Offenbarung liegt die Aufgabe zugrunde, die Absaugcharakteristik im Fertigungsraum, beispielsweise im Bereich einer Bauplattform, zu verbessern sowie die Einkopplung durch ein Laser-Einkoppelfenster (Schutzglas) zu verbessern. Ferner liegt dieser Offenbarung die Aufgabe zugrunde, eine Absaugleistung während eines Fertigungsprozesses oder eines Reinigungsprozesses derart bereitzustellen, dass auch größere Partikel abgeführt werden können.

Zumindest eine dieser Aufgaben wird gelöst durch ein (Gas-) Erfassungselement eines Gaskreislaufs einer Fertigungsvorrichtung zur generativen Fertigung eines dreidimensionalen Bauteils aus einem Pulver nach Anspruch 1 und durch eine Fertigungsvorrichtung zur generativen Fertigung eines dreidimensionalen Bauteils aus einem Pulver nach Anspruch 14. Weiterbildungen sind in den Unteransprüchen angegeben.

In einem Aspekt ist ein Erfassungselement eines Gaskreislaufs einer Fertigungsvorrichtung zur generativen Fertigung eines dreidimensionalen Bauteils aus einem Pulver offenbart. Das Erfassungselement umfasst einen Ansaugkanalabschnitt, der einen streifenförmig ausgebildeten Einströmkanal mit einer Einsaugöffnung aufweist, wobei sich die Einsaugöffnung entlang einer Längsachse erstreckt. Das Erfassungselement umfasst ferner einen Hauptkörperabschnitt, der einen zylinderartigen Hohlraum mit einer abgerundeten Wandung aufweist, wobei der Hohlraum sich entlang des Ansaugkanalabschnitts erstreckt und der Hohlraum mit dem Einströmkanal derart fluidverbunden ist, dass sich eine Stufe in der abgerundeten Wandung ergibt, die einen Durchmessersprung von einem ersten Durchmesser des Hohlraums auf einen zweiten Durchmesser, der größer als der erste Durchmesser ist, bewirkt. Das Erfassungselement umfasst ferner einen ersten gasabführenden Abschnitt, der einen Durchmesseranpassungsabschnitt und einen Rohrabschnitt aufweist, wobei der Durchmesseranpassungsabschnitt ein erstes Ende des Hohlraums in Richtung der Längsachse mit dem Innenvolumen des Rohrabschnitts über einen Kanal fluidverbindet, und wobei in einem Übergangsbereich zwischen Hohlraum und Kanal
- im Bereich des Durchmessersprungs auf der Seite des ersten Durchmessers eine Innenwandoberfläche des Hauptkörperabschnitts (insbesondere bevorzugt im Wesentlichen stufenfrei) in eine Innenwandoberfläche des Durchmesseranpassungsabschnitts übergeht und
- im Bereich des Durchmessersprungs auf der Seite des zweiten Durchmessers die Innenwandoberfläche des Hauptkörperabschnitts über eine Zwischenfläche in die Innenwandoberfläche des Durchmesseranpassungsabschnitts übergeht

In einem weiteren Aspekt umfasst eine Fertigungsvorrichtung zur generativen Fertigung eines dreidimensionalen Bauteils aus einem Pulver einen eine Arbeitsfläche bereitstellenden Fertigungsraum, der einen Bauplattformbereich und einen Pulverreservoirbereich umfasst, eine Schiebevorrichtung zur Überführung des Pulvers vom Pulverreservoirbereich in den Bauplattformbereich und ein Gaskreislaufsystem zum Bereitstellen eines Oberflächenstroms, der über die Arbeitsfläche strömt. Das Gaskreislaufsystem weist ein wie zuvor beschriebenes mit einer Pumpe verbundenes Erfassungselement auf, das derart auf der Arbeitsfläche angeordnet ist oder über ein Zwischenelement mit dem Fertigungsraum fluidverbunden ist, dass die Einsaugöffnung des Erfassungselements am Rand des Bauplattformbereichs und optional des Pulverreservoirbereichs Gas aus den Fertigungsraum absaugt.

In einigen Ausführungsformen des Erfassungselements kann der Durchmesseranpassungsabschnitt das erste Ende des Hohlraums in Richtung der Längsachse mit dem Innenvolumen des Rohrabschnitts über einen sich stetig, bevorzugt kegelartig oder angenähert kegelförmig, in Richtung des Rohrabschnitts verjüngenden Kanal fluidverbinden und/oder als weitgehend stufenfreie Fluidverbindung ausgebildet werden. Die Zwischenfläche kann eine abgestufte Oberflächenverbindung von der Innenwandoberfläche des Hauptkörperabschnitts in die Innenwandoberfläche des Durchmesseranpassungsabschnitts darstellen und die Oberflächenverbindung kann abgestuft, senkrecht oder unter einem Winkel verlaufend, gekrümmt oder gerade ausgebildet sein. Insbesondere kann ein Übergangsbereich zwischen der Zwischenfläche und der Innenwandoberfläche des Hauptkörperabschnitts und/oder zwischen der Zwischenfläche und der Innenwandoberfläche des Durchmesseranpassungsabschnitts kantenfrei oder mit einer abgerundeten Kante ausgebildet sein.

In einigen Ausführungsformen des Erfassungselements kann die Innenwandoberfläche des Hauptkörperabschnitts direkt, insbesondere kantenfrei, in eine Innenwandoberfläche des Durchmesseranpassungsabschnitts übergehen. In einigen Ausführungsformen kann der Ansaugkanalabschnitt eine Deckplatte und eine Bodenplatte aufweisen, zwischen denen der Einströmkanal plattenförmig ausgebildet ist, und die Einsaugöffnung kann an einer Seite des Einströmkanals als lineare, streifenförmige Öffnung ausgebildet ist.

In einigen Ausführungsformen des Erfassungselements kann sich im Bereich des Durchmessersprungs auf der Seite des zweiten Durchmessers eine Stufenseitenfläche in einer radialen Richtung ausgehend vom Durchmessersprung zuerst über die Differenz zwischen dem zweiten Durchmesser und dem ersten Durchmesser erstrecken, die mit zunehmenden Abstand vom Durchmessersprung in radialer Richtung schmaler wird. Optional kann eine Kante des Übergangs der Stufenseitenfläche in den Durchmesseranpassungsabschnitt abgerundet sein. Die Zwischenfläche, insbesondere die Stufenseitenfläche, kann dazu ausgebildet sein, in den Hohlraum eintretendes Gas entlang der Zwischenfläche zur Ausbildung einer Wirbelströmung zu führen. Der Ansaugkanalabschnitt kann sich auf der Seite des Durchmessersprungs mit einer Krümmung quer zur Längsachse erstrecken, und die Krümmung kann ein Einströmen von abgesaugtem Gas tangential zur Innenwand des Hauptkörperabschnitts im Bereich des Durchmessersprungs auf der Seite des zweiten Durchmessers bewirken, so dass abgesaugtes Gas mit einem Drall um die Längsachse durch den Hohlraum und den Kanal in den Rohrabschnitt geführt wird. Ein Eingangsdurchmesser des Kanals kann auf der Seite des Hauptkörperabschnitts auf beiden Seiten des Durchmessersprungs dem ersten Durchmesser entsprechen und ein Ausgangsdurchmesser des Kanals kann auf der Seite des Rohrabschnitts dem Durchmesser des Innenvolumens des Rohrabschnitts entsprechen.

In einigen Ausführungsformen kann das Erfassungselement ferner einen zweiten gasabführenden Abschnitt aufweisen, der wie der erste gasabführende Abschnitt einen entsprechend ausgebildeten Durchmesseranpassungsabschnitt und einen entsprechend ausgebildeten Rohrabschnitt aufweist.

In einigen Ausführungsformen der Fertigungsvorrichtung umfasst diese ferner ein Schutzglas, durch das insbesondere Strahlung einer Strahlquelle zur Erzeugung eines Strahls für die Bestrahlung des Pulvers im Bauplattformbereich zum schichtweisen Herstellen des Bauteils eingestrahlt wird. Dabei kann allgemein ein (weiteres) Erfassungselement derart im Fertigungsraum angeordnet sein, dass die Einsaugöffnung dieses Erfassungselements am Rand des Schutzglases zum Absaugen von Gas vom Bereich des Schutzglases positioniert ist oder über ein Zwischenelement zum Absaugen von Gas vom Bereich des Schutzglases fluidverbunden ist.

Die offenbarten Konzepte bei der generativen Fertigung basieren auf einer Verwendung eines allgemein auch als Drallrohr bezeichneten Erfassungselements, durch das Gas aus dem Fertigungsraum einer LMF-Maschine abgesaugt wird. Drallrohre haben den Vorteil, dass eine homogene Absaugströmung über die gesamte Länge eines Eingangsschlitzes des Drallrohrs bewirkt werden kann. Es wurde ferner erkannt, dass es durch die im Drallrohr zusätzlich ausgebildete schnelle Wirbelströmung (Gaszyklon) möglich ist, neben Rauch und leichten Partikeln bei entsprechender Auslegung des Drallrohrs auch schwerere Partikel aus der LMF-Fertigung, wie Pulver oder Agglomerate aus Pulverkörnern, abzuführen. Durch das ausgebildete Strömungsfeld im Drallrohr sammeln sich dort keine schwereren Partikeln an, sodass diese im Wesentlichen komplett zu einer Filtereinheit des Gassystems geleitet werden können. Dies beruht im Wesentlichen auf hohen randnahen Strömungsgeschwindigkeiten im Inneren des Drallrohrs. Dadurch wird beispielsweise ein effizientes Recycling von Pulver möglich und es wird eine Kontamination einer neu in die LMF-Maschine eingebrachten Pulverart verhindert, da nach einem Wechsel zur neuen Pulverart der Fertigungsraum und das Gaskreislaufsystem einfach vom vorhergehenden Pulver befreit werden können.

Hierzu sind insbesondere entsprechend ausgebildete Strömungsübergänge zwischen einem Drallrohr-Hauptkörperabschnitt und zugehörigen Ableitungsrohren (gasabführende Rohre) hilfreich. Wird der Übergang beispielsweise mit konisch zulaufenden (kegelförmigen) Ansätzen an den (Rohr-) Enden des Hauptkörperabschnitts bewirkt, kann sich kein oder nur sehr wenig Pulver festsetzen. Letzteres ist wie erwähnt insbesondere dann von Vorteil, wenn in einer LMF-Fertigungsvorrichtung aufgrund eines Materialwechsels eine vollständige Reinigung des Innenraums durchzuführen ist. Dabei ist es wichtig, dass keine Pulverreste in der Fertigungsvorrichtung, insbesondere im Gaskreislaufsystem, verbleiben, da derartige Reste eine Kontamination einer neu eingebrachten Pulverart und einen anschließenden Pulver-Recyclingvorgang stören können.

Die hierin offenbarten Konzepte erlauben allgemein eine Skalierbarkeit des Drallrohr-Hauptkörperabschnitts in Abhängigkeit vom abzusaugenden Bereich. Dabei kann eine sehr große Homogenität der Strömung auch bei Absaugungen entlang von langen Linien erreicht werden. Allgemein können die Konzepte in einem weiten Bereich des Verhältnisses von Durchmesser des Drallrohrs (Hauptkörperabschnitt) und Länge der Einsaugöffnung umgesetzt werden, wobei deutlich komplexere numerische Berechnungen des Absaugelements entfallen. Ein weiterer Vorteil basiert auf der selbstreinigenden Wirkung durch die hohe Geschwindigkeit im Drallrohr. Eine selbstreinigende Wirkung tritt beispielsweise für Stahlpulver mit einer mittleren Korngröße von 50 µm (je nach Korngrößenverteilung) bei einer Geschwindigkeit von ca. 3 m/s des Luftstroms ein. Die Geometrie des Drallrohrs kann ferner auch für Geschwindigkeiten bis zu ca. 8 m/s oder bis zu ca. 10 m/s ausgelegt werden, sodass auch für Materialien mit höherer oder niedrigerer Dichte und/oder Partikelgröße ausreichende Geschwindigkeiten sichergestellt werden können.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer beispielhaften generativen Fertigungsvorrichtung,
- Fig. 2: eine schematische Schnittansicht der generativen Fertigungsvorrichtung der Fig. 1 parallel zur XY-Ebene durch den Fertigungsraum,
- Fig. 3: eine schematische Schnittansicht der generativen Fertigungsvorrichtung der Fig. 1 parallel zur XZ-Ebene durch den Fertigungsraum wie in Fig. 2 angedeutet,
- Fig. 4: eine schematische Schnittansicht der generativen Fertigungsvorrichtung der Fig. 1 parallel zur YZ-Ebene durch den Fertigungsraum wie in Fig. 2 angedeutet,
- Fig. 5: eine perspektivische Ansicht eines Drallrohr-basierten Erfassungselements,
- Fig. 6: eine perspektivische Ansicht des Drallrohr-basierten Erfassungselements der Fig. 5 in einer Schnittansicht parallel zur XY-Ebene mittig durch das Erfassungselement,
- Fig. 7: eine perspektivische Ansicht des Drallrohr-basierten Erfassungselements der Fig. 5 in einer Schnittansicht parallel zur YZ-Ebene im Randbereich, und
- Fig. 8A und 8B: Skizzen zur Verdeutlichung eines beispielhaften Strömungsverlaufs im Bereich des Drallrohr-basierten Erfassungselements der Fig. 5.

Hierin beschriebene Aspekte basieren zum Teil auf der Erkenntnis, dass durch den Einsatz eines Drallrohrs bei der generativen Fertigung homogene Strömungsverhältnisse nahe der Pulverbett-Oberfläche, allgemein auf einer abzusaugenden Fläche, erzeugt werden können. Eine Implementierung eines Drallrohr-basierten Erfassungselements kann bei entsprechender Auslegung von Länge und Krümmungsradius eine gleichförmige Linienabsaugung bereitstellen.

Diese kann beispielsweise entlang einer Rückwand/Trennwand eines Fertigungsgehäuses eingesetzt werden, sodass die Arbeitsfläche im Fertigungsraum abgesaugt werden kann.

In der noch unveröffentlichten deutschen Patentanmeldung DE 10 2016 121 490.6 der Anmelderin mit dem Titel "Homogene Absaugung bei der generativen Fertigung" mit Anmeldetag 10. November 2016 ist beispielsweise ein Aufbau für eine laminare, über das Pulverbett hinweg fließende, Strömung beschrieben. Bei der LMF-Fertigung werden nicht nur an der Einlassseite, sondern auch an der Auslassseite der Prozessgasführung homogen verteilte Geschwindigkeiten und Absaugmengen bevorzugt. Die Geschwindigkeitsverteilung kann durch eine spezielle Geometrie des Erfassungselementes des Gasstroms gelöst werden. In einem derartigen Aufbau kann zum Beispiel das hierin offenbarte Erfassungselement eingesetzt werden.

Das Erfassungselement ist so gestaltet, dass sich im Inneren zwangsläufig ein Wirbel bildet, da das in das Drallrohr eintretende abgesaugte Gas entlang der gekrümmten Wandung abgelenkt wird, bevor es am Drallrohrende austritt. Durch die Wirbelbildung ergibt sich ein linienförmiger Bereich mit einer schnellen wirbelförmigen Strömung um das Zentrum des Drallrohrs, die in eine Axialströmung hin zu den Absaugenden übergeht. Die Geschwindigkeit der Wirbelströmung ist rein von den geometrischen Verhältnissen abhängig. Im Hauptkörperabschnitt des Drallrohrs sind diese geometrischen Aspekte konstant. Es entsteht ein linienförmiger Bereich mit hoher Eintrittsgeschwindigkeit in das Drallrohr und niedrigem Partialdruck. Der Unterdruck ist über die Länge des linienförmigen Eintrittsbereichs sehr konstant (Das Verhältnis kleinster Geschwindigkeit zu größter Geschwindigkeit kann größer 0,95 sein), so dass sich sehr gleichförmige Absauggeschwindigkeiten im Bereich der Einsaugöffnung ausbilden können. Für die Ausbildung eines flächigen laminaren Gasstroms wird ein derartiges Erfassungselement bevorzugt mit einer Einlassgeometrie kombiniert, die einen gleichermaßen konstanten Zustrom bewirkt.

Das hierin vorgeschlagene Erfassungselement weist in einem Hauptkörperabschnitt einen spiralförmigen Querschnitt auf. An einem äußeren Ende der "Helix" befindet sich als Einlassgeometrie z. B. eine schlitzförmige, bevorzugt mit Radien versehene Einsaugöffnung. Beispielsweise sind ein oder mehrere Radien zum Verringern der Verlustbeiwerte der Schlitzabsaugung oder größere, trichterförmige Radien zur Querschnittsanpassung des Auslasses möglich.

In einigen Ausführungsformen können Kegelstümpfe an einer oder an beiden Seiten des Hauptkörperabschnitts angesetzt werden. Durch die Kegelform können Toträume (allgemein strömungsfreie/strömungsreduzierte Bereiche) an Übergangen der Wandung zwischen den verschiedenen Abschnitten weitgehend vermieden werden, an denen sich andernfalls Pulverreste ablagern könnten. Je weniger Pulver im Erfassungselement verbleibt, desto besser wird ein Selbstreinigungseffekt durch die Absaugströmung umgesetzt.

In einigen Ausführungsformen wird der spiralförmige Querschnitt durch eine echte Helix-Form des Hauptkörperabschnitts umgesetzt. Ferner umfassen Helix-artige Querschnitte des Drallrohrs z. B. zwei Halbschalen von zwei Rohren mit unterschiedlichen Durchmessern (Krümmungsradien) und allgemein mehreren Schalenelementen mit unterschiedlichen Durchmessern (Krümmungsradien), die möglichst mit stufenfreien Übergängen zur Ausbildung des Hauptkörperabschnitts zusammengesetzt sind.

Die offenbarten Erfassungselemente können an verschiedenen Stellen in LMF-Maschinen zum Einsatz kommen. So können sie beispielsweise im Rahmen einer Fertigungsprozess-nahen (homogenen/laminaren) Gasströmung oberhalb der Arbeitsfläche oder zum Schutz von Schutzgläsern bspw. für Laser, Sensoren, Prozessbeobachtungskameras vor Verschmutzung seitlich vorgesehen werden.

In verschiedenen Ausführungsformen kann die Absaugung an einem Ende des Hauptkörperabschnitts oder an beiden Enden des Hauptkörperabschnitts erfolgen. Bei einer einseitigen Absaugung kann eine Inhomogenität im Strömungsprofil z. B. über Anpassungen des Querschnittes der Einsaugöffnung kompensiert werden. Beispielsweise kann ein trapezförmiger Öffnungsschlitz für die Einsaugöffnung vorgesehen werden.

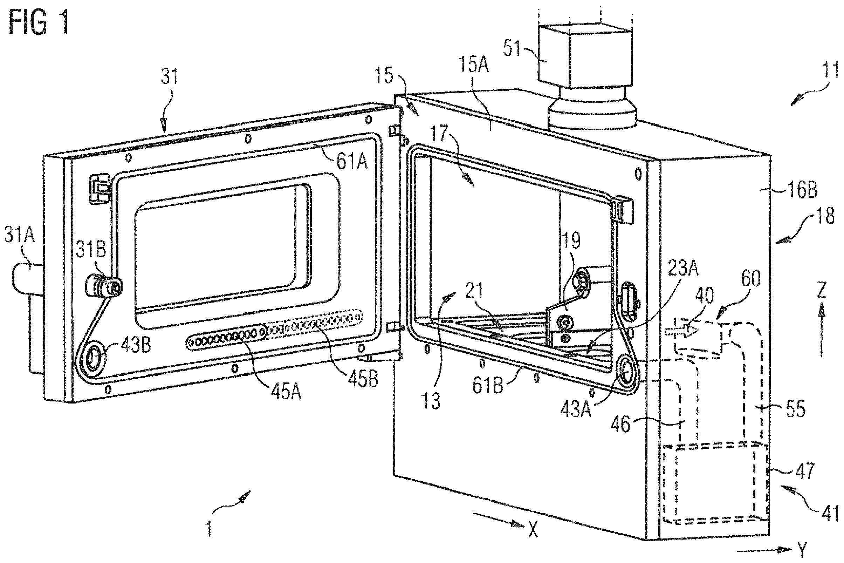

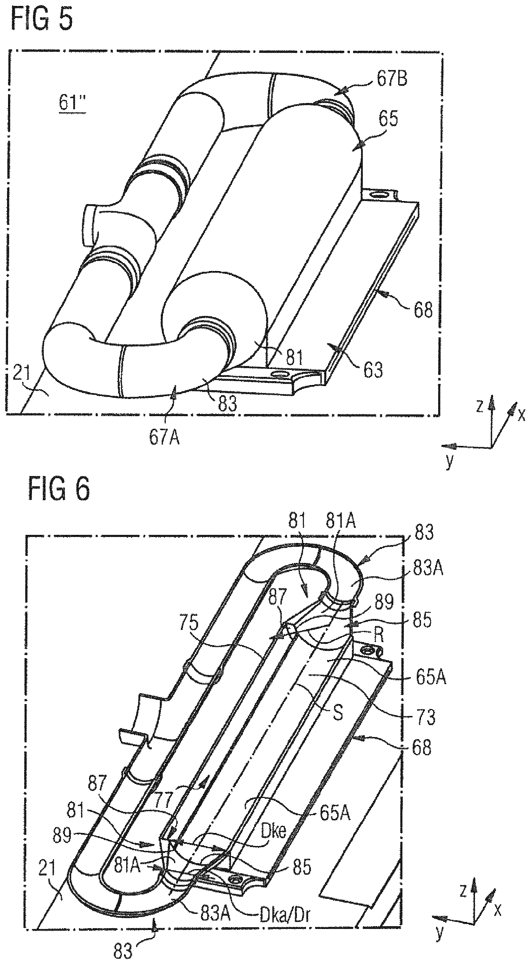

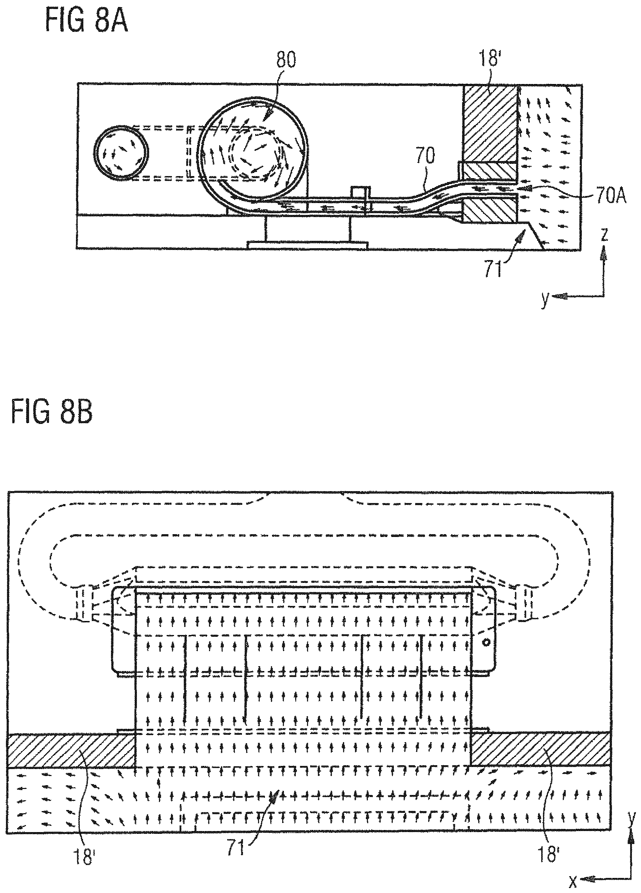

Im Folgenden wird unter Bezugnahme auf die Figuren 1 bis 4 eine Ausführungsform einer LMF-Maschine erläutert, in der ein derartiges Erfassungselement vorgesehen ist. Die Figuren 5 bis 7 zeigen Details eines beispielhaften Erfassungselements zum Einsatz in LMF-Maschinen. Die Figuren 8A und 8B verdeutlichen einen beispielhaften Strömungsverlauf im Bereich des Erfassungselements.

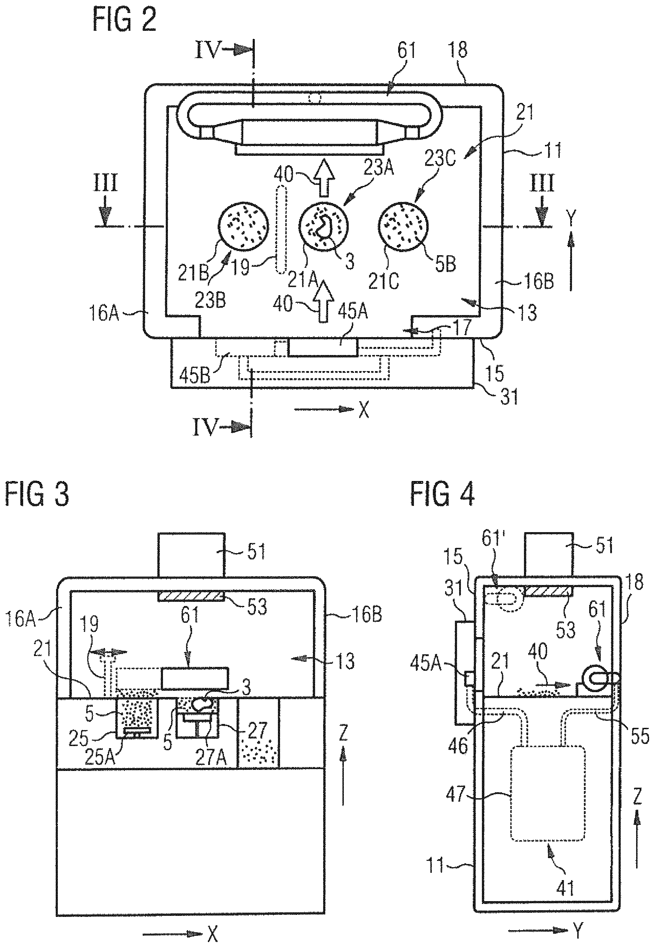

In den Figuren 1 bis 4 ist eine beispielhafte generative Fertigungsvorrichtung 1 zur Erzeugung eines 3D-Bauteils 3 aus einem Pulver 5 gezeigt. Zum Fertigungsvorgang wird auf die eingangs erwähnte EP 2 732 890 A2 verwiesen. Die Fertigungsvorrichtung 1 umfasst ein Hauptgehäuse 11, das einen Fertigungsraum 13 bereitstellt. Eine Frontwand 15 begrenzt den Fertigungsraum 13 auf der Vorderseite. Das Hauptgehäuse 11 weist ferner eine Rückwand 18, Seitenwände 16A, 16B und eine Decke auf, die zusammen den Fertigungsraum 13 definieren. Die Frontwand 15 weist einen Frontrahmen 15A mit einer Öffnung 17 auf, durch die ein Zugang zum Fertigungsraum 13 der Fertigungsvorrichtung 1 ermöglicht wird. Die Öffnung 17 kann während des Herstellungsprozesses durch eine z. B. an der Frontwand 15 angebrachte Tür 31 (Griff 31A, Verschluss 31B) geschlossen werden (siehe Fig. 2). Bei geöffneter Tür 31 besteht Zugang zum Fertigungsraum 13 der Fertigungsvorrichtung 1 (siehe Fig. 1) und ein Bediener kann z. B. die notwendigen Vorbereitungsschritte wie Reinigen des Fertigungsraums 13, Wiederbefüllen des Pulvervorratsbehälters und Wechseln der Pulverart vornehmen und das fertiggestellte Bauteil 3 entnehmen.

Fig. 1 zeigt ferner einen Schieber 19 (hierin auch Wischer genannt) zum Verteilen des Pulvers 5 während des Herstellungsprozesses. Der Herstellungsprozess findet auf einer Arbeitsfläche 21 einer Arbeitsplatte 20 statt, die den Boden des Fertigungsraums 13 bildet. Die Arbeitsfläche 21 weist einen Bauplattformbereich 23A, einen Pulverreservoirbereich 23B und (optional) einen Pulversammelbereich 23C auf. Der Bauplattformbereich 23A kann zentral bezüglich der Öffnung 17 vorgesehen werden. In ihm findet der Bestrahlungsvorgang zur Herstellung des 3D-Bauteils 3 statt. Der Pulverreservoirbereich 23B dient der Bereitstellung von frischem Pulver 5A, das zur lagenweisen Herstellung des 3D-Bauteils 3 in den Bauplattformbereich 23A mit dem Schieber 19 übertragen wird.

Wie in Fig. 2 gezeigt ist der Bauplattformbereich 23A in X-Richtung (d. h. bzgl. der Öffnung 17 in Querrichtung) zwischen dem Pulverreservoirbereich 23B und dem Pulversammelbereich 23C angeordnet. Der Pulverreservoirbereich 23B weist einen z. B. zylinderförmigen Pulvervorratsbehälter 25 auf, dessen oberes Ende in einer (Pulver-) Bereitstellungsöffnung 21B der Arbeitsfläche 21 mündet. Mithilfe eines Stempels 25A kann nach und nach beispielsweise metallisches oder keramisches Pulver 5 aus dem Pulvervorratsbehälter 25 bis über die Arbeitsfläche 21 angehoben werden. Wird eine neue Pulverlage zur Bestrahlung benötigt, kann mit dem Schieber 19 über die Arbeitsfläche 21 hinausragendes frisches Pulver seitlich in X-Richtung in den Bauplattformbereich 23A verschoben werden. Entsprechend erstreckt sich der Schieber 19 in Fig. 2 in Y-Richtung, welche orthogonal zur Querrichtung (X-Richtung) in der Arbeitsfläche 21 verläuft.

Der Bauplattformbereich 23A weist einen z. B. zylinderförmigen Bauzylinder 27 mit einem absenkbaren, eine Plattform zur Ausbildung eines Pulverbetts bereitstellenden Stempel 27A auf. Durch das Absenken bildet sich ein durch die Plattform begrenzter Bauteil-Pulver-Bereich aus, der durch die (Bestrahlungs-) Öffnung 21A in der Arbeitsfläche 21 mit dem Bauplattformbereich 23A verbunden ist. Wurde eine Schicht des Bauteils 3 durch Verschmelzen von Pulver 5 gebildet, wird der Stempel 27A abgesenkt, so dass sich eine durch die Bestrahlungsöffnung 21A in der Arbeitsfläche 21 begrenzte Vertiefung ausbildet, in die das frische Pulver mit dem Schieber 19 verschoben werden kann, so dass sich eine neue obere Pulverlage im zu bestrahlenden Pulverbett ausbildet. Nicht zum Aufbau der neuen Lage benötigtes Pulver kann mit dem Schieber 19 durch eine Öffnung 21C der Arbeitsfläche 21 im Pulversammelbereich 23C z. B. zur Wiederverwertung in einen Sammelbehälter verschoben werden.

Das Hauptgehäuse 11 weist ferner zumindest Teile eines Gaskreislaufsystems 41 auf, wie z. B. einen Schutzgastank und/oder einen Schutzgasanschluss und ein Pumpensystem (nicht gezeigt) sowie eine Filtereinheit 47. Das Gaskreislaufsystem 41 erlaubt es, den Fertigungsraum 13 mit z. B. inertem Gas, wie Argon oder Stickstoff, während des Herstellungsprozesses zu fluten. Ferner kann im Rahmen eines Pulverwechsels eine Reinigung des Fertigungsraums 13 durchgeführt werden.

Ein Bestrahlungssystem 51 kann auf dem Hauptgehäuse 11 z. B. über dem Bauplattformbereich 23A angebracht werden. Das Bestrahlungssystem 51 ist zur Erzeugung von Strahlung, z. B. Laserlicht, welches das Pulver 5 zu Materialschichten des Bauteils 3 verschmelzen kann, ausgebildet. Es basiert beispielsweise auf einem Faser- oder Scheibenlasersystem. Alternativ kann Laserlicht von einer derartigen Quelle zum Hauptgehäuse 11 geführt werden. Das Hauptgehäuse 11 weist ein Scanner-System auf, das die Strahlung in einem auf das Bauteil 3 abgestimmten Pfad im Bauplattformbereich 23A zum lokalen Aufschmelzen der obersten Pulverlage des Pulverbetts führen kann. In einem Bereich der Decke des Hauptgehäuses 11, durch den die Strahlung in den Fertigungsraum eintritt, kann ein Schutzglas 53 vorgesehen sein, das optische Elemente des z. B. Scanner-Systems vor Verunreinigungen schützt.

Das Gaskreislaufsystem 41 ist z. B. derart ausgelegt, dass ein Oberflächenstrom 40 des Schutzgases über/auf die Öffnung 21B der Arbeitsfläche 21 und damit über/auf die oberste Pulverlage des Pulvervorratsbehälters 25 gerichtet ist. Bevorzugt ist das Schutzgas "getrocknet", z. B. weist es einen Feuchtigkeitsgehalt von kleiner ca. 0,0005 g/l auf. Beispiele für trockenbare Schutzgase sind Argon und Stickstoff. Die Trocknung des Schutzgases kann durch Leiten des Schutzgases durch oder über ein Trocknungsmedium/Trockenmittel (z. B. Anhydrone von LECO) im Gaskreislaufsystem 41 erfolgen.

In der gezeigten Ausführungsform bildet sich der Oberflächenstrom 40 im Wesentlichen quer zur Aufreihungsrichtung (hier der X-Richtung) der Öffnungen 21A, 21B aus, d. h., er strömt entsprechend in Y-Richtung über die Öffnung 21A in der Arbeitsfläche 21.

Eine beispielhafte Verwirklichung des angestrebten Strömungsverlaufs im Fertigungsraum 13 ist in den Figuren 9A bis 9D gezeigt und kann insbesondere mit einem (Gas-) Erfassungselement 61, wie es schematisch in den Figuren 5 bis 8 dargestellt ist, erfolgen. Dabei ist der Strömungsverlauf beispielhaft auch für eine Absaugung von Schmauch, Spritzern, Agglomeraten,... ausgelegt. Der Oberflächenstrom 40 strömt beispielhaft von der Tür 31 zur Rückwand 18 über den Bauplattformbereich 23A. Hierin steht Ruß stellvertretend für Kleinstpartikel, die bei der Wechselwirkung des z. B. Laserlichts mit dem Pulver entstehen können. Um eine Beeinflussung des Herstellungsprozesses durch z. B. die angesprochenen Ablagerungen von Ruß auf Optiken oder die Qualität des Bauteils durch Ablagerungen von Ruß auf dem Bauteil selbst zu verhindern, werden diese Kleinstpartikel durch eine entsprechend ausgelegte Strömung aus dem Wechselwirkungsbereich transportiert und vom Erfassungselement abgesaugt.

Das Gaskreislaufsystem 41 umfasst einen Hauptgehäuseabschnitt, der beispielsweise unterhalb und hinter dem Fertigungsraum 13 angeordnet ist, und einen in die Tür 31 integrierten Türabschnitt 41B. Der Hauptgehäuseabschnitt 41A umfasst z. B. den Schutzgastank und/oder den Schutzgasanschluss an eine externe Schutzgasquelle, das Pumpensystem, das Erfassungselement 61 und die Filtereinheit 47 des Gaskreislaufsystems 41.

Die Filtereinheit 47 ist mit dem Erfassungselement 61 in der Rückwand 18 über eine Leitung 55 fluidverbunden. Das Erfassungselement 61 ist z. B. in einem zentralen Bereich der Rückwand 18 auf der Arbeitsfläche 21 befestigt. In einigen Ausführungsformen befindet sich das Erfassungselement 61 in einem hinteren Bereich des Fertigungsraums 13, der beispielsweise durch eine Trennwand vom Prozessbereich abgetrennt ist (siehe beispielsweise die schematisch in den Figuren 8Aund 8B angedeutete Trennwand 18').

Das Gaskreislaufsystem kann dabei so ausgelegt werden, dass zumindest die Abschnitte des Leitungssystems, die einen mit Pulver beladenen Gasstrom führen, einen möglichst glatten, mit Radien abgerundeten Strömungsweg formen. Dies ist insbesondere im Erfassungselement 61 und der Zuleitung vom Fertigungsraum 13 zum Erfassungselement 61 und der Ableitung vom Erfassungselement 61 zur Filtereinheit 47 umgesetzt.

Ferner ist die Filtereinheit 47 mit einer Auslassöffnungsstruktur 45A in der Tür 31 fluidverbunden. Dazu umfasst der Hauptgehäuseabschnitt 41A des Gaskreislaufsystems 41 eine Leitung 46 zur Frontwand 15, die in einer (Gehäuse-) Anschlussöffnung 43A in einem von der Tür 31 abgedeckten Bereich mündet. Die Anschlussöffnung 43A steht bei geschlossener Tür 31 über eine (Tür-) Anschlussöffnung 43B in Fluidverbindung mit dem Türabschnitt 41B des Gaskreislaufsystems 41.

Entsprechend umfasst der Türabschnitt 41B die Auslassöffnungsstruktur 45A für das Gas, das über die Öffnung 21A als Rußabfuhrstrom strömen soll, und optional zusätzlich eine weitere Auslassöffnungsstruktur 45B für das Gas, das über die Bereitstellungsöffnung 21B als Trocknungsstrom strömen soll. Ferner umfasst der Türabschnitt 41B die Anschlussöffnung 45A und eine oder mehrere Verbindungsleitungen von der Anschlussöffnung 45A zu den Auslassöffnungsstrukturen 45A, 45B. In einigen Ausführungsformen können ferner z. B. schaltbare Ventile oder mehrere Anschlussöffnungen vorgesehen werden, um das Ausströmen des Schutzgases aus den Auslassöffnungsstrukturen 45A, 45B kontrollieren zu können. Ferner können die Auslassöffnungsstruktur 45A und/oder das Erfassungselement 61 derart ausgebildet sein, dass sich ein möglichst laminarer (über die Öffnung 21A gerichteter) Strömungsverlauf möglichst nah über der Arbeitsfläche 21 ausbildet.

In den Figuren 2 bis 4 sind schematisch beispielhafte Positionen im Hauptgehäuse 11 für das Erfassungselement angedeutet. So kann dieses beispielhaft nahe der Arbeitsfläche 21 (in den Figuren 2 bis 3 beispielhaft nahe der Rückwand 18) - Erfassungselement 61 - oder an der Decke nahe des Schutzglases 26 - Erfassungselement 61' - für eine linienförmige Absaugung vorgesehen werden.

Die Figuren 5 bis 7 zeigen mehrere perspektivische (Schnitt-) Ansichten eines Drallrohr-basierten Erfassungselements 61", wie es in einen Gaskreislauf einer Fertigungsvorrichtung zur generativen Fertigung, beispielsweise in eine Fertigungsvorrichtung 1, wie sie in Zusammenhang mit den Figuren 1 bis 4 beschrieben wurde, eingesetzt werden kann.

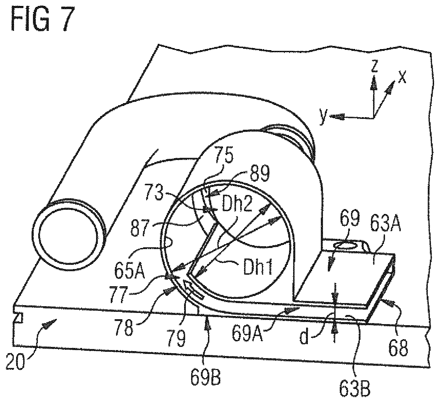

Das Erfassungselement 61" weist einen Ansaugkanalabschnitt 63, einen Hauptkörperabschnitt 65 und einen ersten sowie einen zweiten gasabführenden Abschnitt 67A, 67B auf. Der Ansaugkanalabschnitt 63 bildet einen Einströmkanal 69 (siehe Fig. 7) streifenförmig aus, der z. B. kurz oberhalb der Arbeitsfläche 21 (oder nahe am Schutzglas 53) angeordnet werden kann.

Alternativ können diese Bereiche mit Zuleitungen mit dem Einströmkanal 69 fluidverbunden werden, wie es beispielhaft in Fig. 8A mit einem Zwischenelement 70 angedeutet ist. Das Zwischenelement 70 weist eine oberhalb der Arbeitsfläche 21 angeordnete Zwischenelementeinlassöffnung auf und bildet einen glatten abgerundeten S-förmigen Strömungsweg aus, der im Querschnitt an den Querschnitt des Einströmkanals 69 angepasst ist und diesen bevorzugt stufenfrei fortsetzt.

Bezüglich des Strömungswegs des Erfassungselements 61" erfolgt die Absaugung in den Einströmkanal 69 an einer Seite des Erfassungselements 61" durch eine Einsaugöffnung 68 in Y-Richtung. Die Einsaugöffnung 68 erstreckt sich entlang einer Längsachse linear, die mit Blick auf Fig. 2 entsprechend in X-Richtung ausgerichtet ist. Die Höhe der Einsaugöffnung 68 erstreckt sich entsprechend in Z-Richtung.

Wie in den Schnittansichten des beispielhaften Erfassungselements 61" der Fig. 7 und Fig. 8 gezeigt ist, umfasst der Ansaugkanalabschnitt 63 eine ebene Deckplatte 63A und eine ebene Bodenplatte 63B, zwischen denen sich ein plattenförmig ausgebildeter Abschnitt 69A des Einströmkanals 69 befindet. Die Bodenplatte 63B des Ansaugkanalabschnitts 63 ist beispielsweise als Montageplatte zur Befestigung auf der Arbeitsplatte 20 ausgebildet. Sie kann auf dieser beispielsweise angeschraubt werden.

In den Figuren 8Aund 8B erkennt man im Absaugbereich 71 vor der Einsaugöffnung 69A einen im Wesentlichen laminaren Strömungsverlauf, der sich im Einströmkanal 69 fortsetzt.

Der Einströmkanal 69 setzt sich auf der Seite des Hauptkörperabschnitts 65 in einem quer zur Längsachse X gekrümmten Abschnitt 69B des Einströmkanals 69 fort. Die Krümmung ist z. B. derart gewählt, dass abgesaugtes Gas aus dem Einströmkanal 69 tangential in einen im Wesentlichen zylinderartig geformten Hohlraum 73 des Hauptkörperabschnitts 65 einströmt.

Der zylinderartige Hohlraum 73 wird entsprechend von einer abgerundeten Wandung 75 radial abgegrenzt. Der Hohlraum 73 erstreckt sich (axial) entlang des Ansaugkanalabschnitts 63 und ist mit dem Einströmkanal 69 fluidverbunden. Die fluide Verbindung erfolgt durch eine innere, ebenfalls linear in X-Richtung ausgebildete spaltförmige Öffnung 77. Die Öffnung 77 wird durch eine Stufe 78 in der ansonsten azimutal durchgehend verlaufenden Wandung 75 gebildet. Die Stufe 78 wird durch einen Durchmessersprung von einem ersten Durchmesser Dh1 des Hohlraums 73 auf einen zweiten Durchmesser Dh2, der größer als der erste Durchmesser Dh1 ist, bewirkt.

In der Schnittansicht der Fig. 7 erkennt man, dass eine Dicke d des Einströmkanals 69 in Strömungsrichtung im Wesentlichen konstant sowohl im plattenförmigen Abschnitt 69A als auch im gekrümmten Abschnitt 69B ist. Der gekrümmte Abschnitt 69B ist derart ausgebildet, dass im Bereich des Durchmessersprungs auf der Seite des zweiten Durchmessers Dh2 ein Einströmen von abgesaugtem Gas in den Hohlraum 73 tangential zur Innenwandoberfläche 65A des Hauptkörperabschnitts 65 bewirkt wird (in Fig. 7 durch einen Pfeil 79 angedeutet).

Entsprechend bildet sich eine Wirbelströmung 80 im Hohlraum 73 des Hauptkörperabschnitts 65 aus, wie sie in den Figuren 9A und 9B schematisch mit Pfeilen angedeutet wird.

Die Drallrohr-basierte Ausbildung des Hauptkörperabschnitts 65 dient dazu, eine gleichmäßige Druckverteilung im Ansaugkanalabschnitt 63 zu erzeugen. Dies erfolgt über die Ausbildung dieser schnellen Wirbelströmung (Gaszyklon), d. h., durch die Aufprägung eines Dralls auf die abgesaugte Gasmenge.

Die gasabführenden Abschnitte 67A, 67B weisen jeweils einen Durchmesseranpassungsabschnitt 81 und einen Rohrabschnitt 83 auf. Jeder der Durchmesseranpassungsabschnitte 81 verbindet ein Ende des zylinderartigen Hohlraums 73 in Richtung einer Symmetrieachse S (die beispielhaft parallel zur Längsachse der Einsaugöffnung 69A verläuft) mit einen Innenvolumen 83A des Rohrabschnitts 83 über einen sich kegelförmig in Richtung des Rohrabschnitts 83 verjüngenden Kanal 85 fluid.

Im Übergangsbereich zwischen dem Hohlraum 73 und dem Kanal 85 ist eine spezielle strukturelle Ausführung der Wandübergänge vorgesehen. Wie in Fig. 6 erkannt werden kann, geht im Bereich des Durchmessersprungs auf der Seite des ersten Durchmessers Dh1 die Innenwandoberfläche 65A des Hauptkörperabschnitts 65 stufenfrei in eine Innenwandoberfläche 81A des Durchmesseranpassungsabschnitts 81 über.

Dagegen geht im Bereich des Durchmessersprungs auf der Seite des zweiten Durchmessers Dh2 die Innenwandoberfläche 65A des Hauptkörperabschnitts 65 in die Innenwandoberfläche 81A des Durchmesseranpassungsabschnitts 81 über, beispielsweise abgestuft, mit einer abgerundeten Übergangsfläche oder einer nicht senkrechten Stufe. In der beispielhaft in der Fig. 6 gezeigten Ausführungsform bildet sich im Bereich des Durchmessersprungs auf der Seite des zweiten Durchmessers Dh2 eine Stufenseitenfläche 87 aus, die sich in einer radialen Richtung R ausgehend vom Durchmessersprung zuerst über die Differenz zwischen dem zweiten Durchmesser Dh2 und dem ersten Durchmesser Dh1 erstreckt und z. B. mit abgerundeten Übergängen mit der Innenwandoberfläche 65A und der Innenwandoberfläche 81A verbunden ist. Beispielsweise kann eine Kante 89, die im Übergang von der Stufenseitenfläche 87 zur Innenwandoberfläche 81A des Durchmesseranpassungsabschnitts 81 auftritt, abgerundet sein. Mit zunehmendem Abstand vom Durchmessersprung wird die Stufenfläche 87 in radialer Richtung R schmaler. Allgemein wird in den Hohlraum 73 eintretendes Gas im Randbereich entlang der Stufenseitenfläche 87 strömen, wodurch auch im Randbereich die Wirbelausbildung auftritt.

Die Stufenseitenfläche 87 ist ein Beispiel für eine Zwischenfläche, die die Innenwandoberfläche 65A des Hauptkörperabschnitts 65 mit der Innenwandoberfläche 81A des Durchmesseranpassungsabschnitts 81 verbindet. Insbesondere stellt die Stufenseitenfläche 87 beispielhaft eine abgestufte Oberflächenverbindung dar. In alternativen Ausführungsformen kann die Zwischenfläche als eine unter einem Winkel verlaufende, eine gekrümmt oder eine gerade Stufenfläche ausgebildet sein. Insbesondere kann so ein Übergangsbereich zwischen der Zwischenfläche und der Innenwandoberfläche 65A und/oder ein Übergangsbereich zwischen der Zwischenfläche und der Innenwandoberfläche 81A kantenfrei und/oder mit abgerundeten Kanten/Winkeln/Übergängen ausgebildet sein. Allgemein sollen bevorzugt im Übergangsbereich zwischen Hohlraum 73 und Kanal 85 keine scharfen Kanten vorliegen, an denen sich Pulver ansammeln könnte.

In der beispielhaft dargestellten kegelförmigen Ausführungsform des Durchmesseranpassungsabschnitts 81 entspricht ein Eingangsdurchmesser Dke des Kanals 85 auf der Seite des Hauptkörperabschnitts 63 auf beiden Seiten des Durchmessersprungs dem ersten Durchmesser Dh1. Ein Ausgangsdurchmesser Dka des Kanals 85 entspricht dagegen auf der Seite des Rohrabschnitts einem (Rohrinnen-) Durchmesser Dr des Innenvolumens des Rohrabschnitts 67A, 67B.

In Fig. 6 ist die Symmetrieachse S, die beispielhaft den Ausgangsdurchmessern Dka zugeordnet ist, strichpunktiert eingezeichnet. Die zuvor angesprochene radiale Richtung R bezieht sich beispielhaft auf diese Symmetrieachse S, wobei die Helix-artige Formgebung des Hauptkörperabschnitts 63 nicht durch eine Achsensymmetrie gekennzeichnet ist.

Die gasabführenden Abschnitte 67A, 67B, insbesondere die Rohrabschnitte 83, sind mit einem Filter des Gaskreislaufsystems 41 und mit einer Absaugpumpe fluidverbunden.

Wie in den Figuren 5 und 6 gezeigt ist, vereinen sich bei dem beispielhaft symmetrisch ausgeführten Erfassungselement 61" die beiden gasabführenden Abschnitte 67A, 67B im zentralen Bereich des Hauptkörperabschnitts 65 und werden mit einem Sammelrohr (nicht gezeigt) mit den weiteren Komponenten des Gaskreislaufsystems 41 fluidverbunden.

In einigen Ausführungsformen ist eine Breite des Einströmkanals 69 ca. 1,5-mal so groß wie der Substratplattendurchmesser. Die Höhe des Einströmkanals 69 definiert die gewünschte Flussgeschwindigkeit. Beispielhafte Dimensionen der verschiedenen Strukturmerkmale umfassen einen Einströmkanal 69 in einer Rechteckform von 8 mm x 350 mm (Höhe in Z-Richtung mal Breite in X-Richtung) oder von 10 mm x 450 mm, im Bereich der Stufe 78 einen Durchmesser Dh1 von ca. 30 mm und einen Durchmesser Dh2 von ca. 40 mm und einen Durchmesser Dr des Innenvolumens des Rohrabschnitts 67A von ca. 80 mm.

Die homogene Druckverteilung und damit Geschwindigkeitsverteilung entlang des Hauptkörperabschnitts 63 des Drallrohr-basierten Erfassungselements 61" liegt beispielsweise bei einem Verhältnis von ca. 0,9 (bevorzugt 0,95) von Maximalgeschwindigkeit und Minimalgeschwindigkeit, allgemein ist das Verhältnis Minimalgeschwindigkeit / Maximalgeschwindigkeit bevorzugt kleiner oder gleich 0,9 (z.B. ca. 0,95).

Gemäß den in den Figuren 8A und 8B gezeigten Strömungsverläufen erfolgt die Absaugung ohne strömungsreduzierte oder strömungsfreie Bereiche (tote Winkel), in denen sich beispielsweise Pulver ansammeln könnte. Man erkennt insbesondere in Fig.8B, dass sich ein gleichmäßiges Einströmen entlang des Zwischenelements 70 in den Einströmkanal 69 ausbildet.

Hinsichtlich eines bevorzugt stufenfreien Übergangs der Innenwandoberfläche 65A des Hauptkörperabschnitts 65 in die Innenwandoberfläche 81A des Durchmesseranpassungsabschnitts 81 im Bereich des Durchmessersprungs auf der Seite des ersten Durchmessers Dh1 wird der Fachmann anerkennen, dass insbesondere kleinere, beispielsweise im Herstellungsprozess entstehende Erhebungen oder kleinere Stufe noch einen im Wesentlichen stufenfreien Übergang darstellen können. Der Fachmann wird anerkennen, dass ein wesentlicher Aspekt eines insbesondere stufenfreien Übergangs in der Vermeidung von Bereichen liegt, in denen Strömungsverhältnisse vorliegen, die zu einer für die Fertigung nachteiligen Ansammlung von Pulver führen können.

## Patentansprüche

1. Erfassungselement (61) eines Gaskreislaufs einer Fertigungsvorrichtung (1) zur generativen Fertigung eines dreidimensionalen Bauteils (3) aus einem Pulver (5) mit
einem Ansaugkanalabschnitt (63), der einen streifenförmig ausgebildeten Einströmkanal (69) mit einer Einsaugöffnung (68) aufweist, wobei sich die Einsaugöffnung (68) entlang einer Längsachse (X) erstreckt,
einem Hauptkörperabschnitt (65), der einen zylinderartigen Hohlraum (73) mit einer abgerundeten Wandung (75) aufweist, wobei der Hohlraum (73) sich entlang des Ansaugkanalabschnitts (63) erstreckt und der Hohlraum (73) mit dem Einströmkanal (69) derart fluidverbunden ist, dass sich eine Stufe (78) in der abgerundeten Wandung (75) ergibt, die einen Durchmessersprung von einem ersten Durchmesser (Dh1) des Hohlraums (73) auf einen zweiten Durchmesser (Dh2), der größer als der erste Durchmesser (Dh1) ist, bewirkt, und
einem ersten gasabführenden Abschnitt (67A), der einen Durchmesseranpassungsabschnitt (81) und einen Rohrabschnitt (83) aufweist, wobei der Durchmesseranpassungsabschnitt (81) ein erstes Ende des Hohlraums (73) in Richtung der Längsachse (X) mit dem Innenvolumen (83A) des Rohrabschnitts (83) über einen Kanal (85) fluidverbindet, und
wobei in einem Übergangsbereich zwischen Hohlraum (73) und Kanal (85)
- im Bereich des Durchmessersprungs auf der Seite des ersten Durchmessers (Dh1) eine Innenwandoberfläche (65A) des Hauptkörperabschnitts (65) in eine Innenwandoberfläche (81A) des Durchmesseranpassungsabschnitts (81) übergeht und
- im Bereich des Durchmessersprungs auf der Seite des zweiten Durchmessers (Dh2) die Innenwandoberfläche (65A) des Hauptkörperabschnitts (65) über eine Zwischenfläche (87) in die Innenwandoberfläche (81A) des Durchmesseranpassungsabschnitts (81) übergeht.

2. Erfassungselement (61) nach Anspruch 1, wobei der Durchmesseranpassungsabschnitt (81) das erste Ende des Hohlraums (73) in Richtung der Längsachse (X) mit dem Innenvolumen (83A) des Rohrabschnitts (83) über einen sich stetig, bevorzugt kegelartig oder angenähert kegelförmig, in Richtung des Rohrabschnitts (83) verjüngenden Kanal (85) fluidverbindet und/oder
wobei der Durchmesseranpassungsabschnitt (81) als stufenfreie Fluidverbindung ausgebildet ist und/oder
wobei im Bereich des Durchmessersprungs auf der Seite des ersten Durchmessers (Dh1) die Innenwandoberfläche (65A) des Hauptkörperabschnitts (65) stufenfrei in eine Innenwandoberfläche (81A) des Durchmesseranpassungsabschnitts (81) übergeht.

3. Erfassungselement (61) nach Anspruch 1 oder 2, wobei die Zwischenfläche (87) eine abgestufte Oberflächenverbindung von der Innenwandoberfläche (65A) des Hauptkörperabschnitts (65) in die Innenwandoberfläche (81A) des Durchmesseranpassungsabschnitts (81) darstellt und die Oberflächenverbindung abgestuft, senkrecht oder unter einem Winkel verlaufend, gekrümmt oder gerade ausgebildet ist, und
wobei insbesondere ein Übergangsbereich zwischen der Zwischenfläche und der Innenwandoberfläche (65A) des Hauptkörperabschnitts (65) und/oder zwischen der Zwischenfläche und der Innenwandoberfläche (81A) des Durchmesseranpassungsabschnitts (81) kantenfrei oder mit einer abgerundeten Kante ausgebildet ist.

4. Erfassungselement (61) nach einem der vorhergehenden Ansprüche, wobei die Innenwandoberfläche (65A) des Hauptkörperabschnitts (65) direkt in eine Innenwandoberfläche (81A) des Durchmesseranpassungsabschnitts (81) übergeht.

5. Erfassungselement (61) nach Anspruch 4, wobei die Innenwandoberfläche (65A) des Hauptkörperabschnitts (65) kantenfrei in eine Innenwandoberfläche (81A) des Durchmesseranpassungsabschnitts (81) übergeht.

6. Erfassungselement (61) nach einem der vorhergehenden Ansprüche, wobei der Ansaugkanalabschnitt (63) eine Deckplatte (63A) und eine Bodenplatte (63B) aufweist, zwischen denen der Einströmkanal (69) plattenförmig ausgebildet ist, und die Einsaugöffnung (68) an einer Seite des Einströmkanals (69) als lineare, streifenförmige Öffnung ausgebildet ist.

7. Erfassungselement (61) nach einem der vorhergehenden Ansprüche, wobei sich im Bereich des Durchmessersprungs auf der Seite des zweiten Durchmessers (Dh2) eine Stufenseitenfläche (87) in einer radialen Richtung (R) ausgehend vom Durchmessersprung zuerst über die Differenz zwischen dem zweiten Durchmesser (Dh2) und dem ersten Durchmesser (Dh1) erstreckt, die mit zunehmenden Abstand vom Durchmessersprung in radialer Richtung (R) schmaler wird und wobei optional eine Kante (89) des Übergangs der Stufenseitenfläche (87) in den Durchmesseranpassungsabschnitt (81) abgerundet ist.

8. Erfassungselement (61) nach einem der vorhergehenden Ansprüche, wobei die Zwischenfläche, insbesondere die Stufenseitenfläche (87), dazu ausgebildet ist, in den Hohlraum (73) eintretendes Gas entlang der Zwischenfläche (87) zur Ausbildung einer Wirbelströmung (80) zu führen.

9. Erfassungselement (61) nach einem der vorhergehenden Ansprüche, wobei der Ansaugkanalabschnitt (63) sich auf der Seite des Durchmessersprungs mit einer Krümmung quer zur Längsachse (X) erstreckt, und die Krümmung ein Einströmen von abgesaugtem Gas tangential zur Innenwand des Hauptkörperabschnitts (65) im Bereich des Durchmessersprungs auf der Seite des zweiten Durchmessers (Dh2) bewirkt, so dass abgesaugtes Gas mit einem Drall um die Längsachse (X) durch den Hohlraum (73) und den Kanal (85) in den Rohrabschnitt (83) geführt wird.

10. Erfassungselement (61) nach einem der vorhergehenden Ansprüche, wobei ein Eingangsdurchmesser (Dke) des Kanals (85) auf der Seite des Hauptkörperabschnitts (65) auf beiden Seiten des Durchmessersprungs dem ersten Durchmesser (Dh1) entspricht.

11. Erfassungselement (61) nach einem der vorhergehenden Ansprüche, wobei ein Ausgangsdurchmesser (Dka) des Kanals (85) auf der Seite des Rohrabschnitts (83) dem Durchmesser (Dr) des Innenvolumens (83A) des Rohrabschnitts (83) entspricht.

12. Erfassungselement (61) nach einem der vorhergehenden Ansprüche, ferner mit
einem zweiten gasabführenden Abschnitt (67B), der wie der erste gasabführende Abschnitt (67A) einen entsprechend ausgebildeten Durchmesseranpassungsabschnitt (81) und einen entsprechend ausgebildeten Rohrabschnitt (83) aufweist.

13. Erfassungselement (61) nach Anspruch 12, wobei sich die Rohrabschnitte (83) des ersten gasabführenden Abschnitts (67A) und des zweiten gasabführenden Abschnitts (67B) im Bereich des Hauptkörperabschnitts (65) in einem Sammelrohr (91) vereinen.

14. Fertigungsvorrichtung (1) zur generativen Fertigung eines dreidimensionalen Bauteils (3) aus einem Pulver (5) mit
einem eine Arbeitsfläche (21) bereitstellenden Fertigungsraum (11), der einen Bauplattformbereich (23A) und einen Pulverreservoirbereich (23B) umfasst,
einer Schiebevorrichtung (19) zur Überführung des Pulvers vom Pulverreservoirbereich (23B) in den Bauplattformbereich (23A) und
einem Gaskreislaufsystem (41) zum Bereitstellen eines Oberflächenstroms (40), der über die Arbeitsfläche (21) strömt, wobei das Gaskreislaufsystem (41) ein mit einer Pumpe verbundenes Erfassungselement (61) nach einem der vorhergehenden Ansprüche aufweist, das derart auf der Arbeitsfläche (21) angeordnet ist oder über ein Zwischenelement (70) mit dem Fertigungsraum (11) fluidverbunden ist, dass die Einsaugöffnung des Erfassungselements (61) am Rand des Bauplattformbereichs (23A) und optional des Pulverreservoirbereichs (23B) Gas aus den Fertigungsraum absaugt.

15. Fertigungsvorrichtung (1) nach Anspruch 14, ferner mit
einem Schutzglas (53), durch das insbesondere Strahlung einer Strahlquelle (51) zur Erzeugung eines Strahls für die Bestrahlung des Pulvers (5) im Bauplattformbereich (23A) zum schichtweisen Herstellen des Bauteils (3) eingestrahlt wird,
wobei ein weiteres Erfassungselement (61') derart im Fertigungsraum (11) angeordnet ist, dass die Einsaugöffnung (68) des Erfassungselements (61') am Rand des Schutzglases (53) zum Absaugen von Gas vom Bereich des Schutzglases (53) positioniert ist oder über ein Zwischenelement zum Absaugen von Gas vom Bereich des Schutzglases (53) fluidverbunden ist.

## Claims

1. A detection element (61) of a gas circuit of a manufacturing device (1) for the additive manufacturing of a three-dimensional component (3) from a powder (5), having
a suction channel section (63) which has a strip-shaped inlet channel (69) with a suction opening (68), the suction opening (68) extending along a longitudinal axis (X),
a main part portion (65) having a cylinder-like cavity (73) with a rounded wall (75), the cavity (73) extending along the suction channel section (63) and the cavity (73) being fluidly connected with the inlet channel (69) such that there is a step (78) in the rounded wall (75) which causes a jump in diameter from a first diameter (Dh1) of the cavity (73) to a second diameter (Dh2) which is larger than the first diameter (Dh1), and
a first gas-discharging section (67A), which has a diameter adaptation section (81) and a tubular section (83), the diameter adaptation section (81) fluidly connecting a first end of the cavity (73) in the direction of the longitudinal axis (X) to the inner volume (83A) of the tubular section (83) via a channel (85), and
wherein in a transition area between cavity (73) and channel (85)
- in the region of the diameter jump on the first diameter side (Dh1), an inner wall surface (65A) of the main part portion (65) transitions into an inner wall surface (81A) of the diameter adaptation section (81), and
- in the region of the diameter jump on the second diameter side (Dh2), the inner wall surface (65A) of the main part portion (65) transitions into the inner wall surface (81A) of the diameter adaptation section (81) via an intermediate surface (87).

2. The detection element (61) according to claim 1, wherein the diameter adaptation section (81) fluidly connects the first end of the cavity (73) in the direction of the longitudinal axis (X) with the inner volume (83A) of the tubular section (83) via a continuous, preferably conical or approximately conical channel (85) tapering in the direction of the tubular section (83) and/or
wherein the diameter adaptation section (81) is designed as a step-free fluid connection and/or
wherein in the region of the diameter jump on the first diameter side (Dh1), an inner wall surface (65A) of the main part portion (65) transitions step-free into an inner wall surface (81A) of the diameter adaptation section (81).

3. The detection element (61) according to claim 1 or 2, wherein the intermediate surface (87) is a stepped surface connection from the inner wall surface (65A) of the main part portion (65) into the inner wall surface (81A) of the diameter adaptation section (81) and the surface connection is stepped, perpendicular or at an angle, curved or straight, and
wherein in particular, a transition area between the intermediate surface and the inner wall surface (65A) of the main part portion (65) and/or between the intermediate surface and the inner wall surface (81A) of the diameter adaptation section (81) is formed without edges or with a rounded edge.

4. The detection element (61) according to one of the preceding claims, wherein the inner wall surface (65A) of the main part portion (65) directly transitions into an inner wall surface (81A) of the diameter adaptation section (81).

5. The detection element (61) according to claim 4, wherein the inner wall surface (65A) of the main part portion (65) transitions without edges into an inner wall surface (81A) of the diameter adaptation section (81).

6. The detection element (61) according to one of the preceding claims, wherein the suction channel section (63) has a top plate (63A) and a bottom plate (63B), between which the inlet channel (69) is plate-shaped, and the suction opening (68) on one side of the inlet channel (69) is designed as a linear, strip-shaped opening.

7. The detection element (61) according to one of the preceding claims, wherein in the region of the diameter jump on the side of the second diameter (Dh2) a step side surface (87) extends in a radial direction (R) starting from the diameter jump first over the difference between the second diameter (Dh2) and the first diameter (Dh1), which becomes narrower in the radial direction (R) as the distance from the diameter jump increases, and wherein an edge (89) of the transition from the step side surface (87) to the diameter adaptation section (81) is optionally rounded off.

8. The detection element (61) according to one of the preceding claims, wherein the intermediate surface, in particular the stepped side surface (87), is designed to guide gas entering the cavity (73) along the intermediate surface (87) to form a turbulent flow (80).

9. The detection element (61) according to one of the preceding claims, wherein the suction channel section (63) extends on the side of the diameter jump with a curvature transverse to the longitudinal axis (X), and the curvature causes exhausted gas to flow in tangentially to the inner wall of the main part portion (65) in the section of the diameter jump on the second diameter side (Dh2), such that exhausted gas is guided with a twist about the longitudinal axis (X) through the cavity (73) and the channel (85) into the tubular section (83).

10. The detection element (61) according to one of the preceding claims, wherein an entrance diameter (Dke) of the channel (85) on the side of the main part portion (65) on both sides of the diameter jump corresponds to the first diameter (Dh1).

11. The detection element (61) according to one of the preceding claims, wherein an exit diameter (Dka) of the channel (85) on the side of the tubular section (83) corresponds to the diameter (Dr) of the inner volume (83A) of the tubular section (83).

12. The detection element (61) according to one of the preceding claims, further comprising a second gas-discharging section (67B) which, like the first gas-discharging section (67A), has a correspondingly shaped diameter adaptation section (81) and a correspondingly shaped tubular section (83).

13. The detection element (61) according to claim 12, wherein the tubular sections (83) of the first gas-discharging section (67A) and the second gas-discharging section (67B) unite in a collector pipe (91) in the region of the main part portion (65).

14. A manufacturing device (1) for the additive manufacturing of a three-dimensional component (3) from a powder (5), having
a production space (11) providing a work surface (21) and comprising a construction platform area (23A) and a powder reservoir area (23B),
a sliding device (19) for transferring the powder from the powder reservoir area (23B) to the construction platform area (23A) and
a gas circulation system (41) for providing a surface flow (40) flowing over the work surface (21), the gas circulation system (41) comprising a pump-connected detection element (61) according to one of the preceding claims, which is positioned on the work surface (21) or is fluidly connected to the production space (11) via an intermediate element (70) so that the suction opening of the detection element (61) at the edge of the construction platform area (23A) and optionally the powder reservoir area (23B) sucks gas out of the production space.

15. The manufacturing device (1) according to claim 14, further comprising
a protective glass (53) through which, in particular, radiation from a radiation source (51) for generating a beam for irradiating the powder (5) in the construction platform area (23A) for the layered production of the component (3) is irradiated,
wherein a further detection element (61') is arranged in the production space (11) in such a way that the suction opening (68) of the detection element (61') is positioned at the edge of the protective glass (53) for sucking off gas from the area of the protective glass (53) or is fluidly connected via an intermediate element for sucking gas from the area of the protective glass (53).

## Revendications

1. Élément de détection (61) d'un circuit de gaz d'un dispositif de fabrication (1) pour la fabrication additive d'une pièce (3) tridimensionnelle à partir d'une poudre (5) comprenant
une section de canal d'aspiration (63), laquelle comporte un canal d'admission (69) en forme de bande doté d'une ouverture d'aspiration (68), dans lequel l'ouverture d'aspiration (68) s'étend le long d'un axe longitudinal (X),
une section de corps principal (65), laquelle comporte une cavité (73) en forme de cylindre dotée d'une paroi (75) arrondie, dans lequel la cavité (73) s'étend le long de la section de canal d'aspiration (63) et la cavité (73) est en communication fluidique avec le canal d'admission (69) de telle sorte qu'il y a un gradin (78) dans la paroi (75) arrondie, lequel provoque une variation de diamètre d'un premier diamètre (Dh1) de la cavité (73) à un second diamètre (Dh2), lequel est supérieur au premier diamètre (Dh1), et
une première section évacuant du gaz (67A), laquelle comporte une section d'ajustement de diamètre (81) et une section de tube (83), dans lequel la section d'ajustement de diamètre (81) met en communication fluidique une première extrémité de la cavité (73) dans la direction de l'axe longitudinal (X) avec le volume intérieur (83A) de la section de tube (83) par l'intermédiaire d'un canal (85), et
dans lequel dans une zone de transformation entre la cavité (73) et le canal (85)
- dans la zone de la variation de diamètre sur le côté du premier diamètre (Dh1), une surface de paroi interne (65A) de la section de corps principal (65) se prolonge dans une surface de paroi interne (81A) de la section d'ajustement de diamètre (81), et
- dans la zone de la variation de diamètre sur le côté du second diamètre (Dh2), la surface de paroi interne (65A) de la section de corps principal (65) se prolonge, par l'intermédiaire d'une surface intermédiaire (87), dans la surface de paroi interne (81A) de la section d'ajustement de diamètre (81).

2. Élément de détection (61) selon la revendication 1, dans lequel la section d'ajustement de diamètre (81) met en communication fluidique la première extrémité de la cavité (73) dans la direction de l'axe longitudinal (X) avec le volume intérieur (83A) de la section de tube (83) par l'intermédiaire d'un canal (85) effilé, continu, de préférence conique ou approximativement conique, dans la direction de la section de tube (83) et/ou
dans lequel la section d'ajustement de diamètre (81) est conçue sous la forme d'une liaison fluidique continu et/ou
dans lequel, dans la zone de la variation de diamètre sur le côté du premier diamètre (Dh1), la surface de paroi interne (65A) de la section de corps principal (65) se transforme de manière continue en une surface de paroi interne (81A) de la section d'ajustement de diamètre (81).

3. Élément de détection (61) selon la revendication 1 ou 2, dans lequel la surface intermédiaire (87) est une liaison de surface étagée depuis la surface de paroi interne (65A) de la section de corps principal (65) dans la surface de paroi interne (81A) de la section d'ajustement de diamètre (81) et la liaison de surface est conçue de manière étagée, perpendiculairement ou forme un angle ou courbée ou droite, et
dans lequel, en particulier une zone de transformation, entre la surface intermédiaire et la surface de paroi interne (65A) de la section de corps principal (65) et/ou entre la surface intermédiaire et la surface de paroi interne (81A) de la section d'ajustement de diamètre (81), est formée sans bords ou avec un bord arrondi.

4. Élément de détection (61) selon l'une quelconque des revendications précédentes, dans lequel la surface de paroi interne (65A) de la section de corps principal (65) se transforme directement en une surface de paroi interne (81A) de la section d'ajustement de diamètre (81).

5. Élément de détection (61) selon la revendication 4, dans lequel la surface de paroi interne (65A) de la section de corps principal (65) se transforme sans bords en une surface de paroi interne (81A) de la section d'ajustement de diamètre (81).

6. Élément de détection (61) selon l'une quelconque des revendications précédentes, dans lequel la section de canal d'aspiration (63) comporte une plaque de recouvrement (63A) et une plaque de fond (63B) entre lesquelles le canal d'admission (69) est conçu en forme de plaque, et l'ouverture d'aspiration (68) sur un côté du canal d'admission (69) est conçue sous la forme d'une ouverture linéaire en forme de bande.

7. Élément de détection (61) selon l'une quelconque des revendications précédentes, dans lequel, dans la zone de la variation de diamètre sur le côté du second diamètre (Dh2), une surface latérale en gradin (87) s'étend dans une direction radiale (R) depuis la variation de diamètre d'abord sur la différence entre le second diamètre (Dh2) et le premier diamètre (Dh1), laquelle devient plus étroite dans la direction radiale (R) à mesure que la distance depuis la variation de diamètre augmente, et dans lequel un bord (89) de la transformation de la surface latérale en gradin (87) en la section d'ajustement de diamètre (81) est éventuellement arrondi.

8. Élément de détection (61) selon l'une quelconque des revendications précédentes, dans lequel la surface intermédiaire, en particulier la surface latérale en gradin (87), est conçue pour guider le gaz entrant dans la cavité (73) le long de la surface intermédiaire (87) pour former un écoulement tourbillonnaire (80).

9. Élément de détection (61) selon l'une quelconque des revendications précédentes, dans lequel la section de canal d'aspiration (63) s'étend sur le côté de la variation de diamètre selon une courbure transversale à l'axe longitudinal (X), et la courbure provoque une admission de gaz aspiré tangent à la paroi interne de la section de corps principal (65) dans la zone de variation de diamètre sur le côté du second diamètre (Dh2) de telle sorte que le gaz aspiré est guidé, avec une torsion autour de l'axe longitudinal (X), à travers la cavité (73) et la canal (85) dans la section de tube (83).

10. Élément de détection (61) selon l'une quelconque des revendications précédentes, dans lequel un diamètre d'entrée (Dke) du canal (85) sur le côté de la section de corps principal (65) sur les deux côtés de la variation de diamètre correspond au premier diamètre (Dh1).

11. Élément de détection (61) selon l'une quelconque des revendications précédentes, dans lequel un diamètre de sortie (Dka) du canal (85) sur le côté de la section de tube (83) correspond au diamètre (Dr) du volume intérieur (83A) de la section de tube (83).

12. Élément de détection (61) selon l'une quelconque des revendications précédentes, comprenant en outre une seconde section évacuant du gaz (67B), laquelle, comme la première section évacuant du gaz (67A), comporte une section d'ajustement de diamètre (81) de forme correspondante et une section de tube (83) de forme correspondante.

13. Élément de détection (61) selon la revendication 12, dans lequel les sections de tube (83) de la première section évacuant du gaz (67A) et de la seconde section évacuant du gaz (67B) s'unissent dans un tube collecteur (91) dans la zone de la section de corps principal (65).

14. Dispositif de fabrication (1) pour la fabrication additive d'une pièce (3) tridimensionnelle à partir d'une poudre (5) comprenant
une chambre de fabrication (11) fournissant une surface de travail (21), laquelle comprend une zone de plate-forme de construction (23A) et une zone de réservoir de poudre (23B),
un dispositif coulissant (19) pour transférer la poudre de la zone de réservoir de poudre (23B) à la zone de plate-forme de construction (23A) et
un système de circulation de gaz (41) permettant de fournir un écoulement de surface (40), lequel s'écoule sur la surface de travail (21), dans lequel le système de circulation de gaz (41) comporte un élément de détection (61) connecté à une pompe selon l'une quelconque des revendications précédentes, lequel est positionné sur la surface de travail (21) ou est en communication fluidique avec la chambre de fabrication (11) par l'intermédiaire d'un élément intermédiaire (70) de telle sorte que l'ouverture d'aspiration de l'élément de détection (61) aspire, au bord de la zone de plate-forme de construction (23A) et éventuellement de la zone de réservoir de poudre (23B), du gaz hors de la chambre de fabrication.

15. Dispositif de fabrication (1) selon la revendication 14, comprenant en outre
un verre de protection (53) à travers lequel, en particulier le rayonnement d'une source de rayonnement (51) est émis pour générer un faisceau pour le rayonnement de la poudre (5) dans la zone de plate-forme de construction (23A) pour la fabrication en couches de la pièce(3),
dans lequel un autre élément de détection (61') est disposé dans la chambre de fabrication (11) de telle sorte que l'ouverture d'aspiration (68) de l'élément de détection (61') est positionnée au bord du verre de protection (53) pour aspirer le gaz de la zone du verre de protection (53) ou est en communication fluidique par l'intermédiaire d'un élément intermédiaire pour aspirer le gaz de la zone du verre de protection (53).
